# FASCICULE DE BREVET EUROPEEN

(11) **EP 2 813 404 B1**
(45) Date de publication et mention de la délivrance du brevet: **30.01.2019**
(21) Numéro de dépôt: 14169935.5
(22) Date de dépôt: 27.05.2014
(51) Int. Cl.: B60S 1/40, B60S 1/38, B60S 1/52

(54) **Ensemble d'une tête de bras et d'un adaptateur pour un système d'essuyage de pare brise, adaptateur et tête de bras correspondants et système d'essuyage obtenu**
Einheit aus Scheibenwischerkopf und Adapter für ein Scheibenwischersystem, entsprechender Adapter und entsprechender Kopf des Wischerarms und so erhaltenes Scheibenwischersystem
Assembly of an arm head and of an adapter for a windscreen wiper system, corresponding adapter and corresponding arm head and wiper system obtained

(30) Priorité: 12.06.2013 FR 1355425
(43) Date de publication de la demande: 17.12.2014
(73) Titulaire: Valeo Systèmes d'Essuyage, 78322 Le Mesnil Saint Denis (FR)
(72) Inventeur: Thebault, Denis, 63000 Clermont Ferrand (FR); Bousset, Xavier, 63115 MEZEL (FR); Petitet, Gilles, 63500 ISSOIRE (FR)
(74) Mandataire: Callu-Danseux, Violaine

(56) Documents cités:
- DE-A1- 10 347 637
- DE-A1-102011 001 688
- FR-A1- 2 759 048

## Description

La présente invention concerne un ensemble d'une tête de bras et d'un adaptateur pour un système d'essuyage de pare brise de véhicule, l'adaptateur et la tête de bras correspondants, et un système d'essuyage comprenant ces éléments.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Il est connu de relier le connecteur et l'adaptateur en enfilant un axe transversal au travers de ces deux pièces, après alignement de ces dernières. Une telle solution technique présente plusieurs inconvénients. En effet, la liaison pivot qui résulte de ce montage fait ainsi appel à trois pièces distinctes. L'axe transversal est une pièce métallique, qui représente un coût non négligeable. Par ailleurs, l'utilisation de ces trois pièces génère des complications d'ordre logistique lors de l'assemblage de l'adaptateur sur le connecteur. De plus, il est nécessaire de sécuriser le positionnement de l'axe dans son logement pour éviter qu'il ne s'en échappe.

Le but de la présente invention est de résoudre les inconvénients décrits ci-dessus principalement en supprimant l'axe transversal distinct qui assure la liaison pivot entre l'adaptateur et le connecteur. Selon la demande DE 103 47 637 A1 cet axe transversal est directement issu de l'adaptateur, et ne forme ainsi pas une pièce supplémentaire dont il faut assurer le montage et la gestion logistique.

Il est proposé selon l'invention un ensemble d'une tête de bras et d'un adaptateur pour un système d'essuyage de pare brise de véhicule selon la revendication 1.

On constate en outre que, grâce à l'invention, ladite languette demeure en position immobilisée après montage du balai dans la tête du bras et ne risque pas de rompre la liaison pivot entre l'adaptateur et le connecteur en s'écartant du connecteur.

Selon d'autres caractéristiques de l'invention qui pourront être prises seules ou en combinaison :
- ladite languette est formée latéralement sur l'adaptateur, c'est-à-dire le long d'un côté latéral de l'adaptateur,
- ladite languette est configurée pour coopérer suivant ladite liaison pivot avec une cavité du connecteur,
- ledit adaptateur comprend deux dites languettes, disposées en opposition pour définir un axe d'articulation du connecteur sur l'adaptateur,
- lesdites languettes sont identiques, en particulier symétriques l'une de l'autre relativement à un plan médian de l'adaptateur,
- la ou lesdites languettes prennent appui contre la tête de bras, en particulier contre une surface interne de cette dernière,
- la ou lesdites languettes sont pourvues d'une extension apte à prendre appui contre la tête de bras, en particulier contre ladite surface interne de la tête de bras,
- ladite extension est un doigt, en particulier un doigt étendu latéralement vers l'extérieur dudit adaptateur,
- ladite tête de bras est en forme de chape comportant deux parois latérales définissant un logement pour l'adaptateur, ladite surface interne étant celle d'une et/ou l'autre desdites parois latérales,
- ladite surface interne est un rebord de la tête de bras, par exemple un rebord d'une rampe de guidage et/ou retenue de montage de l'adaptateur dans la tête de bras,
- ledit adaptateur comporte au moins une fenêtre pour permettre le dit appui de la languette à travers la fenêtre après montage du balai dans la tête de bras,
- ledit adaptateur comprend un corps en forme de chape prévu pour s'insérer au montage dans ledit logement de la tête de bras, ladite chape du corps de l'adaptateur comprenant deux ailes latérales dont au moins une d'entre elles comporte la ou l'une desdites fenêtres,
- ledit corps comprend une face supérieure dont sont issues la ou lesdites languettes,
- la ou lesdites languettes s'étendent parallèlement auxdites ailes latérales,
- ladite fenêtre est un orifice de contour fermé d'une paroi dudit corps de l'adaptateur, en particulier d'une de ses ailes latérales,
- ladite fenêtre est une encoche d'un bord inférieur dudit corps de l'adaptateur, en particulier d'une de ses ailes latérales,
- la ou lesdites languettes sont configurées pour permettre l'engagement de ladite liaison pivot de la ou desdites languettes avec le connecteur au montage du balai dans l'adaptateur, par exemple à l'aide d'au moins un chanfrein de guidage,
- la ou les dites languettes sont formées en une seule pièce avec l'adaptateur,
- la ou lesdites languettes sont issues de moulage de matière avec l'adaptateur,
- ledit adaptateur est en matière plastique,
- ledit logement de la tête de bras est configuré pour recevoir ledit adaptateur, dans un mouvement de translation de l'adaptateur sur la tête de bras, dans une direction longitudinale de la tête de bras.

L'invention concerne également un adaptateur dudit ensemble, tel que décrit ci-dessus, la ou lesdites languettes étant pourvues de l'extension apte à prendre appui contre la tête de bras.

L'invention concerne encore une tête de bras dudit ensemble, ladite tête de bras comprenant un dispositif de retenue pour immobiliser ladite languette après montage du balai dans la tête de bras.

Ainsi, l'invention concerne en particulier un adaptateur pour un système d'essuyage de pare brise de véhicule, ledit adaptateur étant configuré pour qu'un connecteur d'un balai du système d'essuyage puisse être monté mobile en rotation sur ledit adaptateur au moyen d'au moins une languette flexible de l'adaptateur apte à établir une liaison pivot avec ledit connecteur, et pour immobiliser ladite languette après montage du balai dans une tête de bras du système d'essuyage.

La ou lesdites languettes sont pourvues d'une extension apte à prendre appui contre une surface interne de la tête de bras.

L'invention concerne également un balai d'essuyage comprenant une lame d'essuyage, un connecteur et un support de ladite lame d'essuyage et du connecteur, prévu configuré pour coopérer avec un adaptateur tel que décrit précédemment. Le connecteur qui participe à la liaison mécanique entre le balai d'essuyage et le bras porte-balai est situé de manière médiane sur le balai, selon un axe longitudinale du balai. En d'autres termes, le balai d'essuyage peut être un balai de type plat, dépourvu de palonniers.

Selon différents modes de réalisation dudit connecteur :
- ladite cavité du connecteur est formée dans un corps du connecteur, en particulier en partie sensiblement centrale de ce dernier,
- ladite cavité est débouchante,
- ladite cavité accueille les languettes de l'adaptateur au niveau de chacune de ses ouvertures.

L'invention concerne également un système d'essuyage comprenant un ensemble et/ou un balai, tels que décrit ci-dessus. Ledit système pourra en particulier comprendre un connecteur monté mobile en rotation sur l'adaptateur dudit ensemble.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue en perspective d'un connecteur constitutif du système d'essuyage selon l'invention,
- les figures 2 et 5, d'une part, et la figure 3, d'autre part sont des vues en perspective de variantes de réalisation d'un adaptateur constitutif du système d'essuyage selon l'invention, et
- les figures 4 et 6 sont des vues en coupe transversale, en perspective, des adaptateurs des figures 3 et 5, respectivement.

Dans la suite de la description, les dénominations longitudinales ou latérales se réfèrent à l'orientation du bras sur lequel est monté le balai d'essuie-glace. La direction longitudinale correspond à l'axe principal du bras dans lequel il s'étend alors que les orientations latérales correspondent à des droites concourantes, c'est-à-dire qui croisent la direction longitudinale, notamment perpendiculaires à l'axe longitudinal du bras et parallèle au pare-brise du véhicule équipé. Pour les directions longitudinales, la dénomination avant désigne la direction allant depuis une extrémité proximale vers une extrémité distale du bras porte-balai et la dénomination arrière la direction opposée. En outre, les directions référencées comme supérieures ou inférieures correspondent à des orientations perpendiculaires au plan de rotation du bras porte-balai, la dénomination inférieure contenant le plan du pare-brise.

Enfin, des références numériques identiques sont utilisées pour désigner des éléments identiques ou analogues.

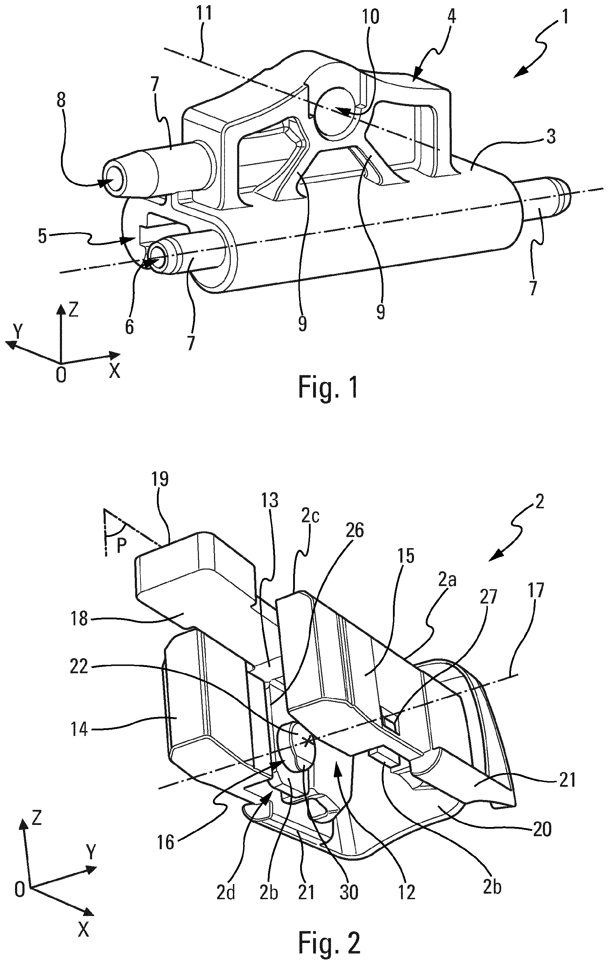

Le système de connexion selon l'invention comprend un connecteur 1 illustré sur la figure 1 associé à un adaptateur 2 représenté sur les figures suivantes. Ces deux pièces sont définies dans un repère orthonormé OX-OY-OZ, où la direction OX représente un axe longitudinal, la direction OZ représente un axe vertical et la direction OY représente un axe transversal.

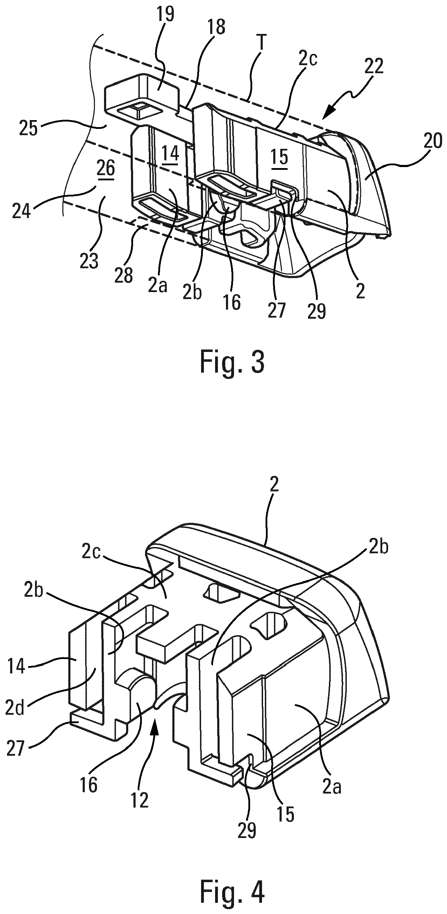

Le connecteur 1 montré sur la figure 1 est agencé pour être rendu solidaire, par exemple par sertissage, d'un balai d'essuyage non représenté qui se déplace sur un pare-brise de véhicule. Un tel balai d'essuyage est entraîné en rotation par un bras d'essuyage dont seule une tête de bras T est représentée en pointillés à la figure 3.

Le connecteur 1 assure une liaison mécanique dite complète avec le balai d'essuyage, en ce sens qu'il n'existe pas de degré de liberté. Le connecteur 1 peut également assurer une fonction de transport et de distribution d'un liquide de lavage du pare-brise.

Le connecteur 1 comprend ici une embase 3 qui s'étend longitudinalement et transversalement. Cette embase 3 forme un support d'une lame d'essuyage non représentée du balai et comprend une zone de solidarisation 5 sur le balai d'essuyage, et plus particulièrement sur une vertèbre de ce balai d'essuyage. Cette zone de solidarisation 5 prend par exemple la forme d'une saignée ménagée dans l'embase 3, cette saignée étant bordée par deux crochets aptes à venir en prise sur le balai d'essuyage. L'embase reçoit également un conduit 6 qui s'étend de manière rectiligne selon l'axe longitudinal OX. Un tel conduit 6 est ménagé sur un côté de l'embase 3, cette dernière donnant naissance à deux embouts 7 sur lesquels s'enfile un moyen de distribution du liquide de lavage constitutif du balai d'essuyage. En variante, il pourra être prévu un autre conduit de distribution du liquide de lavage le long de l'autre côté de l'embase de manière à permettre une alimentation du balai d'essuyage le long de chacun de ses côtés par chacun des conduits, avantageusement de façon à projeter alternativement le liquide suivant le sens montant ou descendant du balai.

L'embase 3 est surmontée d'un flanc 4, par exemple, issu de cette embase 3. Ce flanc 4 présente une dimension transversale et une dimension longitudinale inférieures à celles de l'embase 3. Le flanc 4 est par exemple centré sur l'embase 3, selon l'axe transversal OY et l'axe longitudinal OX.

Le flanc 4 reçoit un canal 8 de circulation par lequel le liquide de lavage peut arriver. Un tel canal 8 est ainsi délimité par le flanc 4 et par un embout 7 qui prend naissance sur le flanc 4, et sur lequel s'enfile un tube de transport du liquide de lavage du pare-brise.

On notera que le flanc 4 peut présenter une pluralité de nervures 9 qui assurent un renforcement mécanique du flanc 4.

Le connecteur 1 et l'adaptateur 2 sont reliés mécaniquement par une liaison pivot. En ce qui concerne le connecteur 1, cette liaison pivot est mise en oeuvre par une cavité 10 réalisée dans le flanc 4. Cette cavité 10 s'étend selon l'axe transversal OY et présente une section circulaire. En d'autres termes, la cavité 10 peut être un trou d'axe central 11, ce dernier étant parallèle à l'axe transversal OY. Dans le plan OXZ, la cavité 10 présente une section circulaire.

Le connecteur 1 décrit ci-dessus est avantageusement unitaire, c'est-à-dire constitué par une même matière synthétique. Ce connecteur peut ainsi être fabriqué au cours d'une unique opération de moulage, notamment par injection.

Les figures suivantes montrent l'adaptateur 2, ce dernier étant une pièce dont les formes sont adaptées aux formes réalisées à une extrémité du bras d'essuyage, à savoir la tête du bras T. Ainsi, le système de connexion selon l'invention peut être utilisé pour différents types de bras d'essuyage, les formes particulières de chaque bras étant reportées sur l'adaptateur 2, alors que le connecteur 1 reste identique quel que soit le type de bras d'essuyage utilisé.

L'adaptateur 2 comprend un corps 2a en forme de chape qui présente une section dans un plan OYZ en forme de U. Cette forme délimite un logement 12 dans lequel est inséré le flanc 4 du connecteur 1.

L'adaptateur 2 comprend donc une face supérieure 2c à partir de laquelle s'étend un premier côté ou aile latérale 14 et un deuxième côté ou aile latérale 15. Le logement 12 est ainsi bordé par la face supérieure 2c, par l'aile latérale 14 et par l'aile latérale 15.

En ce qui concerne l'adaptateur 2, la liaison pivot est assurée par au moins une excroissance 16 d'une languette flexible 2b de l'adaptateur qui vient se loger dans la cavité 10 ménagée dans le connecteur 1. L'excroissance 16 forme ainsi une pièce mâle qui entre dans une forme femelle, cette dernière étant la cavité 10. On notera également que l'excroissance 16 est formée en saillie de la languette 2b, vers l'intérieur du logement 12. Dans le plan OXZ, l'excroissance 16 présente une section circulaire sensiblement complémentaire de celle de la cavité 10.

Selon l'exemple de réalisation, l'adaptateur 2 comprend deux excroissances 16 sur deux languettes 2b opposées qui se font faces l'une à l'autre. Ces deux excroissances forment chacune un toron circulaire 22 coaxial sur un axe de toron 17. Une fois l'adaptateur 2 assemblé sur le connecteur 1, l'axe de toron 17 est confondu avec l'axe central 11 de la ou des cavités 10.

Un bras de verrouillage 18 prend ici naissance sur la face supérieure 2c de l'adaptateur 2. Un tel bras de verrouillage 18 assure le blocage selon l'axe longitudinal OX de l'adaptateur 2 vis-à-vis du bras d'essuyage, un tel bras de verrouillage étant terminé par un plot 19 qui coopère avec un trou ménagé dans la tête de bras T.

A l'autre extrémité longitudinale de l'adaptateur 2, on trouve un capot 20 dont la fonction est de fermer le logement 12 pour cacher la liaison mécanique entre le connecteur 1 et l'adaptateur 2.

A une extrémité libre des ailes latérales 14 et 15, on trouve un bord 21 dont la fonction est d'assurer une butée selon l'axe longitudinal OX à l'encontre de la tête de bras T.

L'invention concerne aussi l'ensemble 22 de la tête de bras T et de l'adaptateur 2, ledit adaptateur 2 étant configuré, comme déjà dit, pour que le connecteur 1 puisse être monté mobile en rotation sur ledit adaptateur 2 au moyen de la ou desdites languettes flexibles 2b de manière à établir ladite liaison pivot avec ledit connecteur. Selon l'invention, ledit ensemble 22 est en outre configuré pour immobiliser la ou lesdites languettes 2b après montage du balai dans la tête de bras.

Ainsi, ladite languette 2b demeure en position immobilisée après montage du balai dans la tête du bras et ne risque pas de rompre la liaison pivot entre l'adaptateur 2 et le connecteur 1 en s'écartant du connecteur.

La ou lesdites languettes 2b pourront être formées latéralement sur l'adaptateur, en particulier dans le logement 12, en étant configurées pour coopérer suivant ladite liaison pivot avec la cavité 10 du connecteur.

Comme mentionné précédemment, ledit adaptateur 2 comprend deux dites languettes 2b, disposées en opposition pour définir un axe d'articulation du connecteur sur l'adaptateur, à savoir l'axe 17 confondu avec l'axe 11. Ces languettes 2b pourront être identiques, en particulier symétriques l'une de l'autre relativement à un plan médian P de l'adaptateur.

La ou lesdites languettes 2b prennent ici appui, après montage du balai dans la tête de bras, contre la tête de bras T, en particulier contre une surface interne 23 de cette dernière.

Ladite tête de bras T est par exemple en forme de chape comportant deux parois latérales 24, 25 définissant un logement 26 pour l'adaptateur. Ladite surface interne 23 est alors celle d'une et/ou l'autre desdites parois latérales 24, 25.

La ou lesdites languettes 2b sont avantageusement pourvues d'une extension 27 apte à prendre appui contre la tête de bras T, en particulier contre ladite surface interne 23 de la tête de bras. Cette extension est avantageusement un doigt 27, en particulier un doigt étendu latéralement vers l'extérieur dudit adaptateur. Ce doigt 27 est avantageusement apte à prendre appui contre l'une des dites deux parois latérales 24, 25, en particulier la surface interne 23 d'une dite paroi latérale.

Ladite surface interne 23 peut aussi être un rebord 28 de la tête de bras, par exemple un rebord d'une rampe de guidage et/ou retenue de montage de l'adaptateur dans la tête de bras.

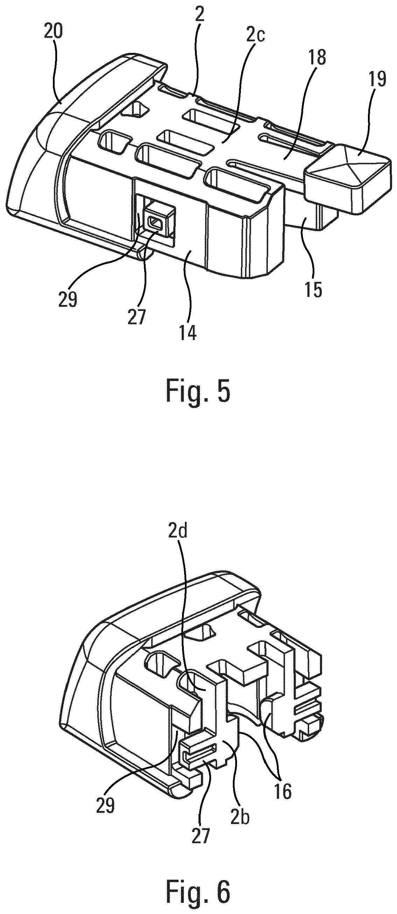

Ledit adaptateur comporte ici au moins une fenêtre 29, tel que représenté aux figures 3 et 5, pour permettre le dit appui de la languette après montage du balai dans la tête de bras. Cette fenêtre 29 est prévue sur au moins une des ailes latérales 14, 15 du corps 2a de l'adaptateur. Selon l'exemple de la figure 5, ladite fenêtre 29 est un orifice de contour fermé d'une paroi dudit corps 2a de l'adaptateur, en particulier d'une de ses ailes latérales. Selon l'exemple de la figure 3, ladite fenêtre 29 est une encoche d'un bord inférieur dudit corps de l'adaptateur, en particulier du bord 21 d'une de ses ailes latérales. Le doigt 27 passe à travers ladite fenêtre et/ou encoche 29 pour venir en appui contre la tête de bras.

Le corps 2a de l'adaptateur comprend en outre la face supérieure 2c dont sont issues, par exemple, la ou lesdites languettes 2b. La ou lesdites languettes 2b s'étendent, de préférence, parallèlement auxdites ailes latérales 14, 15, en particulier à distance de chacune des ailes latérales 14, 15 correspondantes, dans le logement 12.

La ou lesdites languettes 2b sont avantageusement configurées pour permettre l'engagement de ladite liaison pivot de la ou desdites languettes avec le connecteur au montage du balai dans l'adaptateur à l'aide d'au moins un chanfrein 30 de guidage, par exemple disposé au niveau inférieur de l'excroissance 16 pour faciliter la flexion de la languette 2b à l'engagement dans la cavité 10, dans un dégagement 2d de l'aile latérale correspondante .

La ou les dites languettes 2b sont formées ici en une seule pièce avec l'adaptateur, étant avantageusement issues de moulage de matière avec l'adaptateur, par exemple en matière plastique.

Le logement 26 de la tête de bras est configuré pour recevoir ledit adaptateur 2, en particulier dans un mouvement de translation de l'adaptateur sur la tête de bras, dans une direction longitudinale de la tête de bras, à savoir selon l'axe OX. Dans cette translation, l'adaptateur coulisse longitudinalement dans la tête de bras, étant maintenu selon l'axe OZ par un rebord inférieur tourné vers l'intérieur de la tête de bras. A ce sujet, ladite tête de bras pourra comprendre deux dites rampes de guidage, chacune issue de l'une des parois latérales 24, 25 de ladite tête de bras et pliées latéralement l'une vers l'autre, c'est-à-dire vers le logement 26 de la tête de bras. Ces rampes de guidage forment ainsi chacune un bord replié issu de la paroi latérale concernée.

En particulier, ledit ensemble 22 comporte avantageusement un plan de symétrie médian confondu avec le plan médian P de l'adaptateur.

Le montage du système d'essuyage est à présent décrit.

Il s'agit dans un premier temps d'engager l'adaptateur 2 sur le connecteur 1, dans un mouvement de translation vertical ou selon l'axe OZ de l'adaptateur sur le connecteur où les languettes 2b sont amenées simultanément de chaque côté du flan 4 du connecteur en direction des ouvertures opposées de la cavité 10. Les languettes s'écartent vers l'extérieur dans ce mouvement le long dudit flanc, dans la distance 2d d'écartement de l'aile latérale correspondante, puis lorsqu'elles arrivent dans les ouvertures de cavité, elle sont rappelées vers l'intérieur, par effet d'encliquetage en raison de la caractéristique élastique du matériau des languettes, où elles pénètrent en engagement dans les ouvertures de la cavité. L'adaptateur est alors monté sur le connecteur équipé de son balai d'essuyage et l'ensemble peut maintenant être monté sur la tête de bras, dans un mouvement de coulissement longitudinal, selon l'axe OX, de l'ensemble dans la tête de bras.

Les extensions latérales 27 des languettes glissent le long des parois latérales 24, 25 correspondantes et, au terme du coulissement elles viennent en appui sur la surface interne 23 de chacune des parois latérales de la tête de bras, immobilisant le mouvement latéral externe des languettes, ce qui empêche ainsi que leur excroissance 16 ne quitte la cavité 10 pour rompre leur engagement de rotation avec cette dernière.

En variante, les extensions latérales peuvent être formées sur la tête de bras, en particulier sur ses parois latérales. Elles pourront en particulier comprendre un doigt tourné vers l'intérieur pour coopérer avec des saignées ou ajoures de l'adaptateur aptes à recevoir lesdites excroissances pour immobiliser lesdites languettes flexibles de façon à assurer la liaison pivot entre le connecteur et l'adaptateur.

L'invention apporte ainsi une solution simple et fiable pour l'assemblage d'un adaptateur à un connecteur dans un système d'essuyage de pare brise de véhicule.

## Revendications

1. Ensemble (22) d'une tête de bras T et d'un adaptateur (2) pour un système d'essuyage de pare brise de véhicule, ledit adaptateur (2) étant configuré pour qu'un connecteur (1) d'un balai du système d'essuyage puisse être monté mobile en rotation sur ledit adaptateur (2) au moyen d'au moins une languette flexible (2b) de l'adaptateur apte à établir une liaison pivot avec ledit connecteur (1), ledit ensemble (22) étant configuré pour immobiliser ladite languette (2b) après montage du balai dans la tête de bras T, **caractérisé en ce que** ledit adaptateur (2) comporte au moins une fenêtre (29), la au moins une languette (2b) prenant appui contre la tête de bras T à travers la fenêtre (29) après montage du balai dans la tête de bras.

2. Ensemble (22) selon la revendication 1, dans lequel ladite fenêtre est un orifice de contour fermé d'une paroi dudit corps de l'adaptateur ou une encoche d'un bord inférieur dudit corps de l'adaptateur.

3. Ensemble selon la revendication précédente dans lequel ladite fenêtre est un orifice de contour fermé ou une encoche d'un bord inférieur d'une des ailes latérales du corps de l'adaptateur

4. Ensemble selon l'une quelconque des revendications précédentes, dans lequel ladite languette (2b) est formée latéralement sur l'adaptateur (2) et elle est configurée pour coopérer suivant ladite liaison pivot avec une cavité (10) du connecteur.

5. Ensemble (22) selon l'une quelconque des revendications précédentes, dans lequel ledit adaptateur (2) comprend deux dites languettes (2b), disposées en opposition pour définir un axe d'articulation (17) du connecteur sur l'adaptateur.

6. Ensemble (22) selon l'une quelconque des revendications précédentes, dans lequel la ou lesdites languettes (2b) sont configurées pour permettre l'engagement de ladite liaison pivot de la ou desdites languettes avec le connecteur (1) au montage du balai dans l'adaptateur (2).

7. Ensemble (22) selon l'une quelconque des revendications précédentes, dans lequel la ou lesdites languettes (2b) sont pourvues d'une extension (27) apte à prendre appui contre une surface interne (23) de la tête de bras.

8. Ensemble (22) selon la revendication précédente, dans lequel ladite extension (27) est un doigt, en particulier un doigt étendu latéralement vers l'extérieur dudit adaptateur (2).

9. Ensemble (22) selon l'une des revendications 6 et 7, dans lequel ladite tête de bras T est en forme de chape comportant deux parois latérales (24, 25) définissant un logement (26) pour l'adaptateur (2), ladite surface interne (23) étant celle d'une dite paroi latérale (24, 25).

10. Ensemble (22) selon l'une quelconque des revendications précédentes, dans lequel ledit adaptateur (2) comprend un corps (2a) en forme de chape prévu pour s'insérer au montage dans ledit logement (26) de la tête de bras, ladite chape du corps de l'adaptateur comprenant deux ailes latérales (14, 15), ledit corps (2a) comprenant une face supérieure (2c) dont sont issues la ou lesdites languettes (2b).

11. Ensemble (22) selon la revendication précédente, dans lequel la ou lesdites languettes (2b) s'étendent parallèlement auxdites parois latérales (14, 15).

12. Adaptateur (2) pour un système d'essuyage de pare brise de véhicule, ledit adaptateur (2) étant configuré pour qu'un connecteur (1) d'un balai du système d'essuyage puisse être monté mobile en rotation sur ledit adaptateur (2) au moyen d'au moins une languette flexible (2b) de l'adaptateur apte à établir une liaison pivot avec ledit connecteur (1), et pour immobiliser ladite languette (2b) après montage du balai dans une tête de bras T du système d'essuyage, ledit adaptateur (2) étant **caractérisé en ce qu'**il comporte au moins une fenêtre (29), la au moins une languette (2b) prenant appui contre la tête de bras T à travers la fenêtre (29) après montage du balai dans la tête de bras.

13. Adaptateur (2) selon la revendication 12, dans lequel la ou lesdites languettes (2b) sont pourvues d'une extension (27) apte à prendre appui contre une surface interne (23) de la tête de bras T.

14. Système d'essuyage comprenant un adaptateur (2) selon la revendication 12 ou 13 et un balai comprenant une lame d'essuyage, un connecteur (1) et un support (3) de ladite lame d'essuyage et du connecteur (1), prévu configuré pour coopérer avec l'adaptateur (2).

## Patentansprüche

1. Einheit (22) aus Scheibenwischerkopf T und Adapter (2) für ein Scheibenwischersystem einer Fahrzeugwindschutzscheibe, wobei der Adapter (2) eingerichtet ist, dass ein Verbinder (1) eines Wischblatts des Scheibenwischersystems drehbeweglich auf dem Adapter (2) mit Hilfe einer flexiblen Lasche (2b) des Adapters montiert ist, die geeignet ist, eine Schwenkverbindung mit dem Verbinder (1) herzustellen, wobei die Einheit (22) eingerichtet ist, um die Lasche (2b) nach Montage des Wischblatts in dem Scheibenwischerkopf T festzustellen, **dadurch gekennzeichnet, dass** der Adapter (2) mindestens ein Fenster (29) umfasst, wobei die mindestens eine Lasche (2b) an dem Scheibenwischerkopf T durch das Fenster (29) nach Montage des Wischblatts in dem Scheibenwischerkopf zur Anlage gelangt.

2. Einheit (22) nach Anspruch 1, bei der das Fenster eine Öffnung mit geschlossener Kontur einer Wand des Körpers des Adapters oder eine Kerbe eines unteren Randes des Körpers des Adapters ist.

3. Einheit nach dem vorhergehenden Anspruch, bei der das Fenster eine Öffnung mit geschlossener Kontur oder eine Kerbe eines unteren Rades eines der Seitenflügel des Körpers des Adapters ist.

4. Einheit nach einem der vorhergehenden Ansprüche, bei der die Lasche (2b) seitlich auf dem Adapter (2) ausgebildet und eingerichtet ist, um gemäß der Schwenkverbindung mit einem Hohlraum (10) des Verbinders zusammenzuwirken.

5. Einheit (22) nach einem der vorhergehenden Ansprüche, bei der der Adapter (2) zwei Laschen (2b) umfasst, die entgegengesetzt angeordnet sind, um eine Gelenkachse (17) des Verbinders auf dem Adapter zu definieren.

6. Einheit (22) nach einem der vorhergehenden Ansprüche, bei der die Lasche(n) (2b) eingerichtet sind, um das Eingreifen der Schwenkverbindung der Lasche (n) mit dem Verbinder (1) bei der Montage des Wischblatts in dem Adapter (2) zu ermöglichen.

7. Einheit (22) nach einem der vorhergehenden Ansprüche, bei der die Lasche (n) (2b) mit einer Erweiterung (27) versehen sind, die geeignet ist, an einer Innenfläche (23) des Scheibenwischerkopfes zur Anlage zu gelangen.

8. Einheit (22) nach dem vorhergehenden Anspruch, bei der die Erweiterung (27) ein Finger ist, insbesondere ein Finger, der seitlich nach außen zum Adapter (2) erweitert ist.

9. Einheit (22) nach einem der Ansprüche 6 und 7, bei der der Scheibenwischerkopf T gabelförmig ist, umfassend zwei Seitenwände (24, 25), die eine Aufnahme (26) für den Adapter (2) bildet, wobei die Innenfläche (23) jene einer Seitenwand (24, 25) ist.

10. Einheit (22) nach einem der vorhergehenden Ansprüche, bei der der Adapter (2) einen gabelförmigen Körper (2a) umfasst, der dazu vorgesehen ist, sich bei der Montage in die Aufnahme (26) des Scheibenwischerkopfes einzufügen, wobei das Gabelstück des Körpers des Adapters zwei Seitenflügel (14, 15) umfasst, wobei der Körper (2a) eine Oberseite (2c) umfasst, von der die Lasche(n) (2b) ausgehen.

11. Einheit (22) nach dem vorhergehenden Anspruch, bei der sich die Lasche(n) (2b) parallel zu den Seitenwänden (14, 15) erstrecken.

12. Adapter (2) für ein Scheibenwischersystem einer Fahrzeugwindschutzscheibe, wobei der Adapter (2) eingerichtet ist, dass ein Verbinder (1) eines Wischblatts des Scheibenwischersystems drehbeweglich auf dem Adapter (2) mit Hilfe einer flexiblen Lasche (2b) des Adapters montiert werden kann, die geeignet ist, eine Schwenkverbindung mit dem Verbinder (1) herzustellen, und dass die Lasche (2b) nach Montage des Wischblatts in einem Scheibenwischerkopf T des Scheibenwischersystems festgestellt wird, wobei der Adapter (2) **dadurch gekennzeichnet ist, dass** er mindestens ein Fenster (29) umfasst, wobei die mindestens eine Lasche (2b) an dem Scheibenwischerkopf T durch das Fenster (29) nach Montage des Wischblatts in dem Scheibenwischerkopf zur Anlage gelangt.

13. Adapter (2) nach Anspruch 12, bei dem die Lasche(n) (2b) mit einer Erweiterung (27) versehen sind, die geeignet ist, an einer Innenfläche (23) des Scheibenwischerkopfes T zur Anlage zu gelangen.

14. Scheibenwischersystem, umfassend einen Adapter (2) nach Anspruch 12 oder 13 und ein Wischblatt, umfassend eine Wischleiste, einen Verbinder (1) und eine Halterung (3) der Wischleiste und des Verbinders (1), die dazu vorgesehen ist, für ein Zusammenwirken mit dem Adapter (2) eingerichtet zu sein.

## Claims

1. Assembly (22) of an arm head T and of an adapter (2) for a vehicle windscreen wiper system, the said adapter (2) being configured so that a connector (1) of a wiper of the wiper system can be mounted rotatably on the said adapter (2) by means of at least one flexible tongue (2b) of the adapter able to establish a pivot connection with the said connector (1), the said assembly (22) being configured to immobilize the said tongue (2b) after mounting the wiper in the arm head T, **characterized in that** said adapter (2) comprises at least one window (29), the at least one tongue (2b) bearing against the arm head T through the window (29) after mounting the wiper in the arm head.

2. Assembly (22) according to Claim 1, in which said window is an orifice of closed contour of a wall of the said body of the adapter or a notch of a lower edge of the said body of the adapter.

3. Assembly according to the preceding Claim, in which said window is an orifice of closed contour or a notch of a lower edge of one of the lateral wings of the body of the adapter.

4. Assembly according to any one of the preceding claims, in which the said tongue (2b) is formed laterally on the adapter (2) and it is configured to cooperate following the said pivot connection with a cavity (10) of the connector.

5. Assembly (22) according to any one of the preceding claims, in which the said adapter (2) comprises two said tongues (2b), arranged in opposition to define an axis of articulation (17) of the connector on the adapter.

6. Assembly (22) according to any one of the preceding claims, in which the tongue or the said tongues (2b) are configured to allow the engagement of the said pivot connection of the tongue or the said tongues with the connector (1) during mounting of the wiper in the adapter (2).

7. Assembly (22) according to any one of the preceding claims, in which the tongue or the said tongues (2b) are provided with an extension (27) able to bear against an internal surface (23) of the arm head.

8. Assembly (22) according to the preceding claim, in which the said extension (27) is a finger, in particular a finger extended laterally towards the outside of the said adapter (2).

9. Assembly (22) according to either of Claims 6 and 7, in which the said arm head T is in the form of a clevis comprising two side walls (24, 25) defining a housing (26) for the adapter (2), the said internal surface (23) being that of a said side wall (24, 25).

10. Assembly (22) according to any one of the preceding claims, in which the said adapter (2) comprises a body (2a) in the form of a clevis provided to be inserted during mounting in the said housing (26) of the arm head, the said clevis of the body of the adapter comprising two lateral wings (14, 15), the said body (2a) comprising an upper face (2c) from which the tongue or the said tongues (2b) emanate.

11. Assembly (22) according to the preceding claim, in which the tongue or the said tongues (2b) extend parallel to the said side walls (14, 15).

12. Adapter (2) for a vehicle windscreen wiper system, the said adapter (2) being configured so that a connector (1) of a wiper of the wiper system can be mounted rotatably on the said adapter (2) by means of at least one flexible tongue (2b) of the adapter able to establish a pivot connection with the said connector (1), and to immobilize the said tongue (2b) after mounting the wiper in an arm head T of the wiper system, said adapter (2) being **characterized in that** it comprises at least one window (29), the at least one tongue (2b) bearing against the arm head T through the window (29) after mounting the wiper in the arm head

13. Adapter (2) according to Claim 12, in which the tongue or the said tongues (2b) are provided with an extension (27) able to bear against an internal surface (23) of the arm head T.

14. Wiper system comprising an adapter (2) according to Claim 12 or 13 and a wiper comprising a wiper blade, a connector (1) and a support (3) of the said wiper blade and of the connector (1), provided configured to cooperate with the adapter (2).
